# EUROPÄISCHE PATENTANMELDUNG

(11) **EP 0 993 928 A2**
(43) Veröffentlichungstag der Anmeldung: **19.04.2000**
(21) Anmeldenummer: 99118494.6
(22) Anmeldetag: 18.09.1999
(51) Int. Cl.: B29C 49/56, B29C 33/30, B29C 33/22

(54) **Vorrichtung zum Anpassen einer Kunststoffverarbeitungsmaschine, insbesondere Blasformmaschine, an unterschiedliche Formdicken**

(30) Priorität: 14.10.1998 DE 19847306
(71) Anmelder: Fischer-W. Müller Blasformtechnik GmbH, 53842 Troisdorf (DE)
(72) Erfinder: Stocksiefen, Raimund, 53844 Troisdorf (DE)
(74) Vertreter: Valentin, Ekkehard, Dipl.-Ing.

(57) **Zusammenfassung**

Eine Vorrichtung (18,19) zum Anpassen der auf von Jochen (3,4) getragenen Formaufspannplatten (5,6) einer Kunststoffverarbeitungsmaschine, insbesondere Blasformmaschine, angeordneten Werkzeughälften (7) eines mindestens zweiteiligen Werkzeugs an unterschiedliche Formdicken, wobei wenigstens ein an das vordere Maschinenjoch (4) angeflanschter Hydraulikzylinder das Werkzeug (7) schließt und verriegelt, indem die Kolbenstange (12) des Zylinders (11) mit einem an ihrem freien Stangenende ausgebildeten Riegelkopf (13) in ein komplementäres Verriegelungsstück eines Riegelholms (14) der gegenüberliegenden, hinteren Formaufspannplatte (5) eingreift, ermöglicht eine einfache und variablere Einstellung auf eine neue Formdicke, wenn den Formaufspannplatten (5,6) eine stufenlos verstellbare Formdickeneinstelleinrichtung (18,19) zugeordnet ist.

## Beschreibung

Die Erfindung betrifft eine Vorrichtung zum Anpassen der auf von Jochen getragenen Formaufspannplatten einer Kunststoffverarbeitungsmaschine, insbesondere Blasformmaschine, angeordneten Werkzeughälften eines mindestens zweiteiligen Werkzeugs an unterschiedliche Formdicken, wobei wenigstens ein an das vordere Maschinenjoch angeflanschter Hydraulikzylinder das Werkzeug schließt und verriegelt, indem die Kolbenstange des Zylinders mit einem an ihrem freien Stangenende ausgebildeten Riegelkopf in ein komplementäres Verriegelungsstück eines Riegelholms der gegenüberliegenden, hinteren Formaufspannplatte eingreift.

Ein Blasformmaschine mit einer solchen Riegelholm-Schließeinheit ist durch die DE 195 16 125 C1 bekanntgeworden. Für die mindestens zweiteilige Werkzeugform ist je Werkzeughälfte eine Formaufspannplatte vorhanden, die zum Schließen und Öffnen des Werkzeugs von mindestens einem elektrischen Antrieb mit zumindest einer Spindel über einen großen Hub aus einer offenen Entform-Position in eine nahezu geschlossene Arbeitsposition und umgekehrt bewegt werden sowie von wenigstens einem Hydraulikzylinder über einen kleinen Hub in die vollständig geschlossene Arbeitsposition, in der die Formaufspannplatten verriegelt sind, und umgekehrt bewegt werden. Die Schließantriebe sind an eine gemeinsame Steuerung oder Regelung angeschlossen, die mit einem Wegaufnehmer des Werkzeugs bzw. der Formaufspannplatten zusammenwirkt.

Wenn produktionsbedingt mit unterschiedlichen Formdicken gearbeitet werden muß, sind bei dieser bekannten Blasformmaschine aufwendige Montagearbeiten erforderlich. Denn sobald auf ein anderes Format der Werkzeughälften übergegangen werden muß, ist es erforderlich, die in der von dem hinteren Joch getragenen Formaufspannplatte verankerten Riegelholme zu versetzen, wozu deren von dem Verriegelungsstück abgewandtes freies Stangenende mit entsprechenden, gestuften Rastausnehmungen versehen ist. Nach dem Versetzen der Riegelholme wird das neue Einstellmaß durch eine von hinten auf das Riegelholmende aufgesetzte Kontermutter gesichert.

Der Erfindung liegt die Aufgabe zugrunde, eine Vorrichtung der eingangs genannten Art so zu gestalten, daß sich die Einstellung auf eine neue Formdicke einfacher und mit variableren Möglichkeiten erreichen läßt.

Diese Aufgabe wird in verblüffend einfacher Weise dadurch gelöst, daß den Formaufspannplatten eine stufenlos verstellbare Formdickeneinstelleinrichtung zugeordnet ist. Abgesehen davon, daß keine aufwendigen Justagearbeiten zur Einstellung der in der Regel mindestens zwei Riegel bzw. Riegelholme erforderlich sind, ergibt sich eine von einem festen Rastermaß unabhängige und damit auch Zwischengrößen gestattende Formdickeneinstellung. Die erreichte kontinuierliche Verstellbarkeit erspart eine ansonsten erforderliche Formhinterfütterung und ermöglicht zudem asymmetrische Formtrennungen.

Eine erste Ausführung der stufenlos verstellbaren Formdickeneinstelleinrichtung besteht aus zwischen den Maschinenjochen und den Formaufspannplatten angeordneten Spindelmuttereinheiten. Das erforderliche Einstellmaß läßt sich somit durch ein mehr oder weniger großes Verstellen der Mutter erreichen. Dies kann bspw. mittels eines elektrischen Antriebes geschehen.

Nach einer bevorzugten Ausgestaltung weist die Spindelmuttereinheit einen jochseitigen Gewindebolzen, eine spannplattenseitige, den Gewindebolzen in situ konzentrisch umschließende, mit einem Betätigungsmittel, vorzugsweise in Form eines konzentrisch auf die Spindelmutter aufgesetzten Handrades, beaufschlagbare, axial unbeweglich festgelegte Spindelmutter und eine vorkragend in den Gewindebolzen eingesetzte Paßführung auf Die Verstellung erfolgt hierbei manuell durch Betätigung des Handrades, das ein axiales Verstellen des Gewindebolzens in der Mutter bewirkt. Dieser mit einem Außengewinde in das komplementäre Innengewinde der Mutter eingreifende Gewindebolzen schraubt sich je nach Drehrichtung des Handrades entsprechend mehr oder weniger aus der Mutter heraus bzw. in diese hinein, wobei die gesamte Länge des Gewindeabschnitts der Mutter beim Einstellen auf ein kleineres Formdickenmaß - hierbei nehmen die Werkzeughälften einen geringeren Abstand voneinander ein - ausgenutzt werden kann, weil das Vorkragende der Paßführung für eine Abstützung des sich aus der Mutter herausschraubenden Gewindebolzens sorgt.

Die Spindelmutter ist vorzugsweise drehbar in einem mit dem Joch verschraubten Überwurfring angeordnet. Dieser hält die Mutter drehbar, aber axial unbeweglich in ihrer Position an der Formaufspannplatte, d.h., die Rotation der Mutter wird in eine lineare Verstellbewegung des Gewindebolzens umgewandelt, so daß sich die Formaufspannplatte entsprechend mehr oder weniger von dem Joch entfernt.

Nach einer anderen Ausführung der stufenlos verstellbaren Formdickeneinstelleinrichtung ist der Hydraulikzylinder mit einem Wegmeßsystem ausgebildet und mit einem größeren Hub als für die kleinste Formdicke benötigt ausgelegt. Wenn mit von der kleinsten Formdicke abweichenden Werkzeughälften gearbeitet wird, können die Joche und damit die Formaufspannplatten weniger nah aufeinander zugefahren werden. Um ohne Unterfütterung bzw. der vorbeschriebenen mechanischen Formdickeneinstelleinrichtung dennoch zu gewährleisten, daß die Riegel-köpfe der Hydraulikzylinder in die gegenüberliegenden, komplementären Verriegelungsstücke der Riegelholme der hinteren Formaufspannplatte eingreifen, ermöglichen die mit einem größeren Hub ausgelegten Zylinder ein von dem an die übergeordnete Maschinensteuerung angeschlossenen Wegmeßsystem vorgegebenes Ausfahren der Kolbenstangen bis in die Verriegelungsposition. Der maximale Hub entspricht somit der größten Formdicke, in der die Joche bzw. die Formaufspannplatten am weitesten voneinander entfernt sind, was bei dieser Ausführung statt durch eine Einstelleinrichtung durch einen entsprechend verlängerten Kolbenweg ausgeglichen wird. Das den Ausfahrhub genau vorgebende Wegmeßsystem ermöglicht zudem gleichzeitig einen exakt angepaßten Ölverbrauch, der folglich minimiert wird, weil er stets an den jeweiligen Bedarf und die Taktzeiten angepaßt werden kann.

Weitere Einzelheiten und Vorteile der Erfindung ergeben sich aus den Patentansprüchen und der nachfolgenden Beschreibung, in der Ausführungsbeispiele des Gegenstandes der Erfindung näher erläutert sind. Es zeigen:
- Figur 1: eine schematische Gesamtansicht einer mit einer stufenlos verstellbaren Formdickeneinstelleinrichtung ausgerüsteten Blasformmaschine;
- Figur 2: als Einzelheit der Blasformmaschine nach Fig. 1 die beiden Joche mit den von diesen unter Zwischenschaltung einer mechanisch stufenlos verstellbaren Formdickeneinstelleinrichtung getragenen Formaufspannplatten, wobei die rechte Einstelleinrichtung auf das kleinste und die links gezeigte Einstelleinrichtung auf das größte Formdickenmaß verstellt ist;
- Figur 3: als Einzelheit die für die Formaufspannplatten gemäß Fig. 2 eingesetzte Formdickeneinstelleinrichtung, explosiv dargestellt;
- Figur 4: als Einzelheit die zusammengebaute Formdickeneinstelleinrichtung mit dem in der linken Hälfte von Fig. 2 gezeigten, größten Formdicken-Einstellmaß; und
- Figur 5: die Formdickeneinstelleinrichtung gemäß Fig. 4 mit dem eingestellten kleinsten Formdickenmaß.

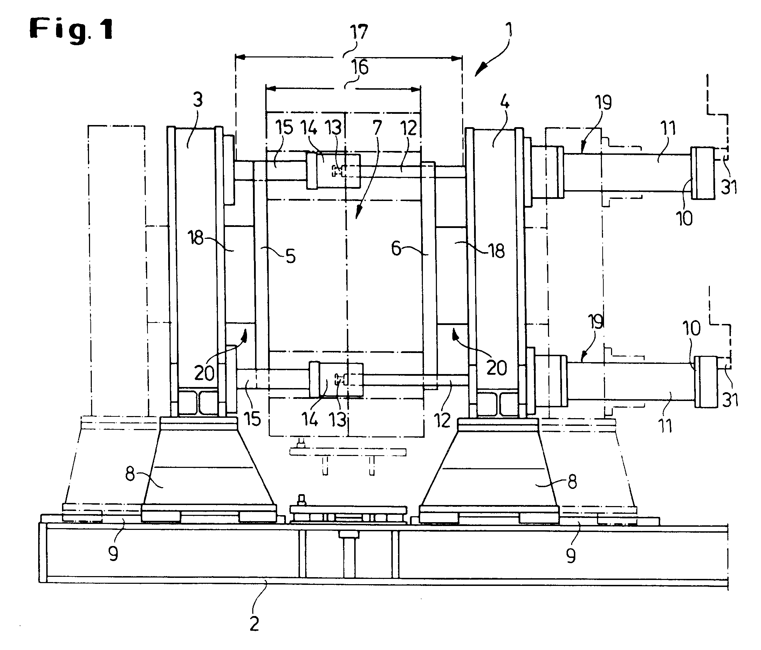

Die Blasformmaschine 1 gemäß Fig. 1 besitzt zwei auf einem mit dem Fundament verankerten Grundrahmen 2 bewegliche Joche 3, 4 mit von diesen getragenen Formaufspannplatten 5 bzw. 6. Sowohl die hintere Formaufspannplatte 5 als auch die vordere Formaufspannplatte 6 trägt eine aus zeichnerischen Gründen lediglich gestrichelt schematisch dargestellte Werkzeughälfte eines zweiteiligen Blasformwerkzeuges 7. Weiterhin nicht dargestellt ist ein Speicherkopf oder dergleichen, der Blasform-Vorformlinge herstellt und diese von oben in den Werkzeugbereich abgibt, wo sie durch Blasformen in bekannter Weise zu einem fertigen Artikel weiterbearbeitet werden.

Zum Blasformen einerseits und zum Entformen des fertigen Artikels andererseits werden die Joche 3, 4 symmetrisch auf- und zubewegt. Die Fahrbewegung von der geöffneten Entform-Position (diese ist in Fig. 1 gestrichelt angedeutet) bis in die geschlossene Position wird durch einen in dem Grundrahmen 2 angeordneten, nicht gezeigten Verfahr- bzw. Schließantrieb in Form eines Getriebemotors erreicht, dessen jeweiliger Fahrweg durch einen Wegaufnehmer erfaßt und einer übergeordneten Maschinensteuerung übermittelt wird. Aufgrund der Antriebskinematik und -anordnung wird sichergestellt, daß die mit Fußsockeln 8 auf Linearführungen 9 des Grundrahmens 2 angeordneten Joche 3, 4 und damit die Formaufspannplatten 5, 6 gleichsinnig verstellt werden.

Der den großen Hub bzw. Verfahrweg bewirkende elektrische Verfahrantrieb wird durch einen den kleinen Hub in die vollständig geschlossene Arbeitsposition des Werkzeugs 7 bewirkenden Schließantrieb 10 ergänzt, der aus zwei an das vordere Joch 4 angeflanschten Hydraulikzylindern 11 besteht, die über kurze Wege hohe Schließkräfte erzeugen. Zur Übertragung der Schließkraft wird das Werkzeug 7 verriegelt, wozu deren aus der vorderen Formaufspannplatte 6 seitlich vorbeigeführten Kolbenstangen 12 an ihrem freien Stangenende mit einem Riegelkopf 13 ausgebildet sind, der in ein komplementäres Verriegelungsstück 14 der gegenüberliegenden, hinteren Formaufspannplatte 5 eingreift und nach dem Einrasten das Verriegelungsstück 14 kraftschlüssig fixiert Die Verriegelungsstücke 14 sind an Riegelholmen 15 ausgebildet, die mit ihrem hinteren Ende an das Joch 3 angeflanscht sind.

Das Werkzeug 7 mit seinen beiden Werkzeughälften definiert gemäß Fig. 1 die kleinste Formdicke 16. Wenn mit einer davon abweichenden, in Fig. 1 schematisch gestrichelt angedeuteten Formdicke 17 gearbeitet werden soll, können die Joche 3, 4 nicht so nah aufeinander zugefahren werden, wie mit den durchgezogenen Linien der Joche 3, 4 gezeigt; sie nehmen vielmehr einen größeren Abstand voneinander ein. Damit die Riegelköpfe 13 der Kolbenstangen 12 dennoch in Eingriff mit den Verriegelungsstücken 14 der Riegelholme 15 gebracht werden können, sind zwei Ausführungen einer stufenlos verstellbaren Formdickeneinstelleinrichtung 18 bzw. 19 möglich, die der Einfachheit halber beide bei der Blasformmaschine 1 nach Fig. 1 eingezeichnet sind, tatsächlich aber alternativ vorgesehen werden.

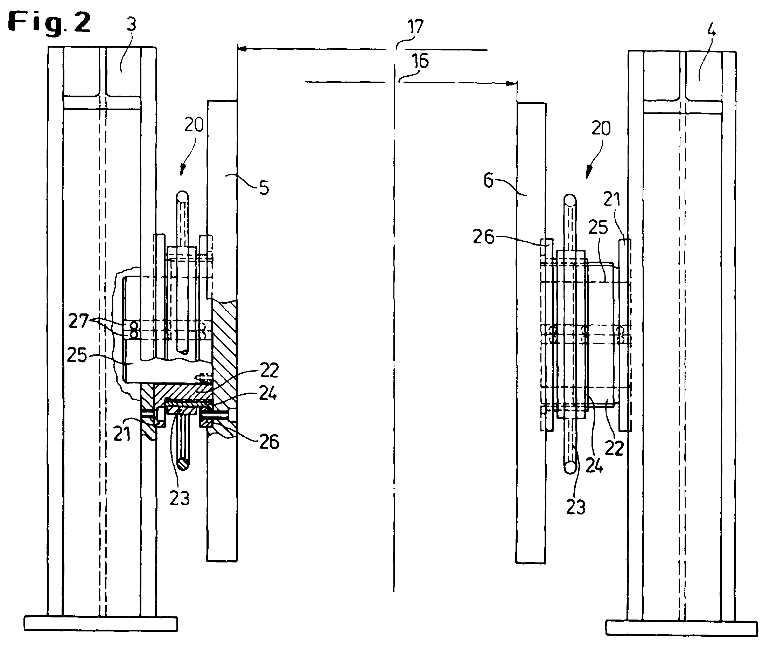

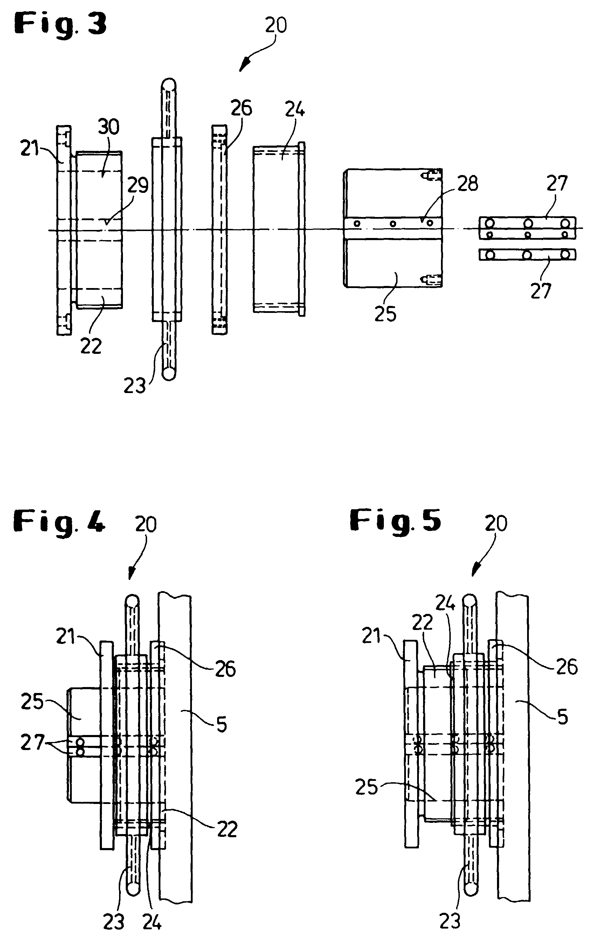

Die Formdickeneinstelleinrichtung 18 besteht aus zwischen den Maschinenjochen 3, 4 und den von diesen jeweils getragenen Formaufspannplatten 5, 6 angeordneten Spindelmuttereinheiten 20 (vgl. Fig. 3), die jeweils einen jochseitigen, mittels eines Anflanschstückes 21 an das Joch 3 bzw. 4 angeschraubten Gewindebolzen 22, eine spannplattenseitige, den Gewindebolzen 22 konzentrisch umschließende, im Ausführungsbeispiel nach den Fig. 2 bis 5 mit einem Handrad 23 beaufschlagbare, axial unbeweglich festgelegte Spindelmutter 24 und eine vorkragend in die Spindelmutter 24 eingesetzte Paßführung 25 aufweist. Ein konzentrisch auf die Spindelmutter 24 aufgesetzter Überwurfring 26 wird mit der Formaufspannplatte 5 bzw. 6 verschraubt und hält die Mutter drehbar, aber axial unbeweglich. Beim Betätigen des Handrades 23 - oder alternativ eines nicht gezeigten elektrischen Antriebes - schraubt sich somit der Gewindebolzen 22 aus der Gewindemutter 24 mehr oder weniger heraus - je nach Drehrichtung - und verstellt somit die dazugehörige Formaufspannplatte 5 bzw. 6 auf die gewünschte Formdicke 16 oder 17 (vgl. auch Fig. 2); aufgrund der stufenlosen Verstellmöglichkeit lassen sich auch beliebige Zwischenlagen zwischen der kleinsten und größten Formdicke 16 bzw. 17 einstellen. Die einwandfreie Führung des sich axial verlagernden Gewindebolzens 22 wird durch spielfreie Paßfedern 27 erreicht, die in komplementäre Ausnehmungen 28 bzw. 29 einerseits der Paßführung 25 und andererseits des Gewindebolzens 22 eingesetzt sind, wozu dieser eine Innenausdrehung 30 aufweist, in die das Paßstück 25 folglich eingreift.

Während bei der vorbeschriebenen Ausführung zur Formdickeneinstellung die Formaufspannplatten 5 bzw. 6 auf den gewünschten axialen Abstand voneinander stufenlos verlagert werden, um trotz unterschiedlicher Formdicken einen Eingriff der Riegelköpfe 13 der Kolbenstangen 12 der Hydraulikzylinder 10 in die gegenüberliegenden Verriegelungsstücke 14 der Riegelholme 15 zu gewährleisten, bleiben bei der in Figur 1 gezeigten alternativen Formdickeneinstelleinrichtung 19 die Formaufspannplatten 5 bzw. 6 in einem stets gleichen, unveränderbaren Abstand zu den dazugehörigen Jochen 3 bzw. 4. Bei einem Übergang von bspw. der Formdicke 16 auf die Formdicke 17, in der die Joche 3, 4 entsprechend weiter als zuvor voneinander entfernt sind, wird der Verriegelungseingriff durch einen größeren Hub der Hydraulikzylinder 11 gewährleistet, deren Kolbenstangen 12 überwacht von einem bspw. bodenseitig in den Zylindern 11 integrierten Wegmeßsystem 31, das an eine übergeordnete Maschinensteuerung angeschlossen ist, positionsgenau entsprechend weiter vor- bzw. ausgefahren werden.

Mit entweder der Formdickeneinstelleinrichtung 18 oder 19 wird in jedem Fall ein einfaches Einstellen auf unterschiedliche Formdicken erreicht, ohne aufwendige Justagearbeiten durchführen zu müssen. Die Formdickeneinstellungen sind hierbei nicht von einem bestimmten Rastermaß abhängig, und außerdem sind ohne weiteres vorteilhaft asymmetrische Formtrennungen möglich.

## Patentansprüche

1. Vorrichtung zum Anpassen der auf von Jochen getragenen Formaufspannplatten einer Kunststoffverarbeitungsmaschine, insbesondere Blasformmaschine, angeordneten Werkzeughälften eines mindestens zweiteiligen Werkzeugs an unterschiedliche Formdicken, wobei wenigstens ein an das vordere Maschinenjoch angeflanschter Hydraulikzylinder das Werkzeug schließt und verriegelt, indem die Kolbenstange des Zylinders mit einem an ihrem freien Stangenende ausgebildeten Riegelkopf in ein komplementäres Verriegelungsstück eines Riegelholms der gegenüberliegenden, hinteren Formaufspannplatte eingreift,
**dadurch gekennzeichnet,**
daß den Formaufspannplatten (5, 6) eine stufenlos verstellbare Formdickeneinstelleinrichtung (18; 19) zugeordnet ist.

2. Vorrichtung nach Anspruch 1,
**dadurch gekennzeichnet,**
daß die Formdickeneinstelleinrichtungen (18) aus zwischen den Maschinenjochen (3, 4) und den Formaufspannplatten (5, 6) angeordneten Spindelmuttereinheiten (20) bestehen.

3. Vorrichtung nach Anspruch 2,
**dadurch gekennzeichnet,**
daß jede Spindelmuttereinheit (20) einen jochseitigen Gewindebolzen (22), eine spannplattenseitige, den Gewindebolzen (22) in situ konzentrisch umschließende, mit einem Betätigungsmittel (23) beaufschlagbare, axial unbeweglich festgelegte Spindelmutter (24) und eine vorkragend in den Gewindebolzen (22) eingesetzte Paßführung (25) aufweist.

4. Vorrichtung nach Anspruch 3,
**dadurch gekennzeichnet,**
daß das Betätigungsmittel ein konzentrisch auf die Spindelmutter (24) aufgesetztes Handrad (23) ist.

5. Vorrichtung nach einem der Ansprüche 2 bis 4,
**dadurch gekennzeichnet,**
daß die Spindelmutter (24) drehbar in einem mit dem Joch (3 bzw. 4) verschraubten Überwurfring (26) angeordnet ist.

6. Vorrichtung nach Anspruch 1,
**dadurch gekennzeichnet,**
daß der Hydraulikzylinder (11) mit einem Wegmeßsystem (31) ausgebildet und mit einem größeren Hub als für die kleinste Formdicke (16) benötigt ausgelegt ist.
